# FASCICULE DE BREVET EUROPEEN

(11) **EP 2 769 096 B1**
(45) Date de publication et mention de la délivrance du brevet: **20.01.2016**
(21) Numéro de dépôt: 12775256.6
(22) Date de dépôt: 19.10.2012
(51) Int. Cl.: F04B 37/02, F04B 37/14, B01D 53/32, B01D 53/68, B01D 53/70, F04C 25/02, F04D 19/04

(54) **DISPOSITIF DE POMPAGE ET DE TRAITEMENT DES GAZ**
VORRICHTUNG ZUM PUMPEN UND ZUR BEHANDLUNG VON GASEN
APPARATUS FOR PUMPING AND FOR THE TREATMENT OF GASES

(30) Priorité: 19.10.2011 FR 1103200
(43) Date de publication de la demande: 27.08.2014
(73) Titulaire: Pfeiffer Vacuum, 74000 Annecy (FR)
(72) Inventeur: PALISSON, Julien, 74330 Sillingy (FR); FAVRE, Arnaud, 74000 Annecy (FR)
(74) Mandataire: Croonenbroek, Thomas Jakob
(86) Numéro de dépôt international: PCT/EP2012/070795
(87) Numéro de publication internationale: WO 2013/057272

(56) Documents cités:
- EP-A1- 1 014 761
- EP-A1- 1 538 656
- EP-A2- 0 692 635
- WO-A1-02/097158
- WO-A1-2007/091100
- US-A1- 2004 229 419

## Description

La présente invention concerne le pompage et le traitement des gaz extraits des chambres à vide telles que les chambres de procédés utilisées pour la fabrication des semi-conducteurs. Plus particulièrement, l'invention concerne un dispositif de pompage et de traitement des gaz apte à générer un plasma sur les gaz circulant entre deux étages de pompage successifs.

Les gaz de procédé utilisés dans l'industrie des semi-conducteurs, tels que les gaz à effet de serre de type PFCs sont généralement toxiques, corrosifs ou même nuisibles à la couche d'ozone ou induisant un fort effet de serre. Il est donc nécessaire de traiter les gaz extraits avant tout rejet dans l'atmosphère, pour ne rejeter que des gaz peu nuisibles.

Jusqu'à présent, on a essentiellement traité les gaz de procédé dans des ensembles de traitement de gaz situés au refoulement des systèmes de pompage.

Un premier inconvénient de ces ensembles de traitement de gaz connus est leur grand volume nécessaire pour traiter la quantité importante de flux sortant. Ces ensembles de traitement de gaz sont pour cela délocalisés, c'est-à-dire placés dans un étage inférieur des usines de fabrication de semi-conducteurs, et reliés à la chambre de procédés par des canalisations longues et coûteuses. L'encombrement de ces ensembles de traitement de gaz rend impossible leur intégration à proximité des chambres de procédés.

Un second inconvénient est que le flux sortant des systèmes de pompage contient non seulement les gaz qui ont été extraits des chambres de procédés, mais contient en outre des gaz de purge qui sont introduits dans la chaîne de vide, entre la sortie des chambres de procédés et le refoulement des systèmes de pompage. Ces gaz de purge, ajoutés pour protéger les systèmes de pompage, perturbent l'efficacité du traitement, et conduisent à une augmentation supplémentaire du volume des ensembles de traitement des gaz.

Le document EP 1 538 656 propose de réaliser au moins un traitement partiel des gaz entre deux étages successifs d'une pompe à vide du système de pompage, en plaçant, à l'intérieur même de la pompe à vide, une source de plasma qui assure la décomposition des gaz à pomper, dont les gaz nocifs à traiter. Ces gaz décomposés peuvent être recombinés dans la pompe à vide avec un gaz réactant, comme de l'eau ou de l'oxygène, qui empêche la recomposition des gaz décomposés par le plasma, et qui les recompose suivant une réaction chimique contrôlée en sous-produits moins nocifs.

L'intégration du système de traitement des gaz dans le groupe de pompage permet le traitement des gaz nocifs au plus près des chambres de procédés, ce qui réduit l'encombrement du système de traitement des gaz et évite sa délocalisation dans un étage inférieur des usines de fabrication de semi-conducteurs.

Le plasma est par exemple généré dans une canalisation inter-étages à l'intérieur du stator à vide. Avec cet agencement, le système de traitement des gaz ne perturbe pas l'efficacité de pompage.

On constate cependant que le plasma est trop confiné dans la canalisation inter-étage. Ce confinement limite le parcours des molécules à traiter. Pour atteindre une bonne efficacité de traitement il est alors nécessaire d'augmenter fortement la puissance de la source de plasma. A titre d'exemple, pour obtenir une efficacité de l'ordre de 90% de décomposition du gaz CF₄ dans un procédé classique de gravure oxyde 200 mm, une puissance de la source de plasma de l'ordre de 3000W est requise. De cela résulte des coûts énergétiques importants.

Par ailleurs, les températures atteintes localement par la génération du plasma de forte puissance peut conduire à une surchauffe du corps de la pompe à vide. Cet échauffement peut entraîner une dilatation du stator, risquant de provoquer sa déformation, voire même dans le pire des cas, de provoquer un grippage de la pompe à vide. Cette surchauffe du stator peut également entraîner la dégradation de la qualité d'étanchéité des joints de la pompe.

Pour pallier ces inconvénients ainsi que d'autres, la présente invention propose un dispositif de pompage et de traitement des gaz apte à générer un plasma sur les gaz circulant entre deux étages de pompage successifs, qui fonctionne durablement et qui ne dégrade pas les capacités de pompage de la pompe à vide.

A cet effet, l'invention a pour objet un dispositif de pompage et de traitement des gaz comprenant un stator comportant une pluralité d'étages de pompage raccordés en série les uns à la suite des autres entre une aspiration et un refoulement par des canaux inter-étages, caractérisé en ce que le dispositif de pompage et de traitement des gaz comporte:
- un tube interne et un tube externe borgne, les tubes étant insérés l'un dans l'autre et constitués de matériau céramique, le tube interne étant raccordé au refoulement du logement des rotors d'un étage de pompage et le tube externe étant raccordé au stator, et communiquant avec au moins un canal inter-étage ménagé dans le stator, les tubes définissant un trajet pour les gaz pompés, et
- une source de plasma disposée à l'extérieur du stator pour générer un plasma sur le trajet des gaz pompés.

Selon une ou plusieurs caractéristiques du dispositif de pompage et de traitement des gaz, prise seule ou en combinaison :
- le tube interne et le tube externe sont coaxiaux,
- l'axe du tube interne est excentré de l'axe du tube externe,
- le tube interne est raccordé dans le stator et le tube externe est raccordé à l'extérieur du stator,
- le dispositif de pompage et de traitement des gaz comporte en outre une pompe à vide primaire dite à anneau liquide,
- le moyen de traitement des gaz est raccordé au refoulement du logement des rotors du deuxième étage de pompage,
- les étages de pompage comprennent une entrée respective agencée dans la partie supérieure du dispositif de pompage et de traitement des gaz et les tubes sont agencés sous le stator, le tube externe communiquant avec deux canaux inter-étages ménagés de part et d'autre du logement, pour raccorder l'entrée supérieure de l'étage de pompage suivant,
- l'extrémité d'entrée du tube interne affleure la sortie du logement du deuxième étage de pompage,
- l'extrémité d'entrée du tube interne est raccordée de manière amovible à la sortie et l'ouverture du tube externe est raccordée de manière amovible au stator,
- l'extrémité d'entrée du tube interne est raccordée au stator par un support intermédiaire métallique du moyen de traitement des gaz,
- une collerette de fixation est ménagée dans le matériau du tube interne, autour de l'extrémité d'entrée et le support intermédiaire présente un logement axial muni d'une rainure annulaire recevant un joint, la collerette de fixation de l'extrémité d'entrée étant fixée au support intermédiaire par enfoncement dans le logement axial,
- le support intermédiaire est vissé au stator,
- un épaulement de fixation est ménagé dans le matériau du tube externe, en bordure de l'ouverture et le dispositif de pompage et de traitement des gaz comporte une bride annulaire et un joint, la bride annulaire coopérant avec l'épaulement de fixation pour fixer le tube externe au stator de manière étanche,
- le matériau céramique du tube interne et du tube externe est du nitrure de bore,
- le matériau céramique du tube interne et du tube externe est du nitrure d'aluminium,
- la source de plasma est une source de plasma micro-ondes,
- la pompe à vide comprend un moyen d'injection de gaz réactant pour injecter un gaz réactant dans le stator, en aval de la source de plasma dans le sens d'écoulement des gaz à pomper.

Ce sont donc les tubes interne et externe en matériau céramique du moyen de traitement des gaz qui servent localement de conduites pour les gaz à pomper. Les matériaux céramique présentent l'avantage d'être inertes chimiquement et particulièrement robustes face aux agressions chimiques et aux températures de gaz élevées. Ils sont en outre électriquement neutres, et donc transparents aux ondes de la source de plasma, ce qui permet à ces dernières de traverser les tubes pour générer un plasma sur les gaz. De plus, les matériaux céramique résistent à une mise sous vide. Les tubes en matériau céramique présentent donc toutes les qualités qui sont requises d'une part pour la fonction de moyen de traitement des gaz et d'autre part, pour la fonction de pompage de la pompe à vide.

Le plasma est alors au moins partiellement contenu dans les tubes en matériau céramique, ce qui évite la surchauffe de la partie fonte du stator. Le moyen de traitement des gaz permet alors d'adapter facilement l'interaction entre le plasma et le gaz à pomper en jouant sur la longueur des tubes à la puissance souhaitée. La longueur des tubes peut être optimisée pour obtenir un parcours du gaz suffisant permettant d'augmenter le temps de résidence du gaz à traiter dans les tubes et ainsi d'augmenter la taille du plasma. En effet, plus le temps de résidence des gaz dans le plasma est long et plus la probabilité que ces gaz soient décomposés par le plasma est grande. Il est alors possible de garantir l'efficacité de décomposition recherchée par le plasma sans avoir à augmenter la puissance de la source de plasma.

En outre, l'impact sur la capacité de pompage est limité pour deux raisons principales.

Premièrement, la pression des gaz dans la zone de génération du plasma peut être très basse, telle qu'inférieure à 1 mbar. Cette basse pression peut être obtenue d'une part en agençant le moyen de traitement des gaz en sortie du deuxième étage de pompage, proche de l'aspiration et d'autre part, grâce au moyen de pompage supplémentaire.

Deuxièmement, la géométrie du système de traitement des gaz ne limite que très peu la conductance du trajet des gaz. Par rapport à une pompe à vide standard, c'est-à-dire sans moyen de traitement des gaz intégré, la conductance résultant des deux tubes insérés l'un dans l'autre n'est diminuée que par le demi-tour en bout de course des tubes. Relativement, la longueur des tubes n'impacte que très peu la conductance. Le moyen de traitement des gaz présente ainsi le minimum de coude ou discontinuité de volume, susceptibles de freiner la circulation des gaz et donc de réduire la capacité de pompage de la pompe à vide.

Ainsi, il n'est pas nécessaire d'augmenter la puissance de la source de plasma pour garantir l'efficacité de décomposition du plasma et les capacités de pompage de la pompe à vide sont préservées. Pour obtenir une efficacité de l'ordre de 90% de décomposition du gaz CF₄ dans un procédé classique de gravure oxyde 200 mm, la puissance de la source de plasma nécessaire est alors inférieure à 2000W. Les coûts énergétiques de fonctionnement sont alors considérablement réduits et il n'y a plus de risque de surchauffe du stator.

Un autre avantage du dispositif de pompage et de traitement des gaz est que l'agencement des tubes en sortie du deuxième étage de pompage permet de conserver le premier étage de pompage exempt de gaz décomposé. Le premier étage assure alors un rôle de filtre en empêchant toute rétrodiffusion de gaz décomposé en amont du dispositif de pompage et de traitement, dans la chambre de procédé.

De plus, les gaz à pomper sortant du deuxième étage de pompage contiennent peu de gaz de purge qui sont introduits dans chaque étage de pompage. Ces gaz de purge, ajoutés pour protéger les pompes à vides, peuvent perturber l'efficacité du traitement. En disposant le moyen de traitement des gaz en sortie du deuxième étage de pompage, on agit sur les gaz nocifs avant même leur dilution dans les gaz de purge.

En outre, lorsque le dispositif de pompage et de traitement des gaz comporte une pompe à vide primaire dite à anneau liquide, en plus de réduire la pression, on neutralise les gaz décomposés en les recombinants avec une solution aqueuse. La neutralisation des gaz décomposés du dispositif de pompage et de traitement des gaz est alors encore plus efficace et l'encombrement réduit.

Le dispositif de pompage et de traitement des gaz peut en outre s'adapter facilement sur des pompes à vide existantes sans nécessiter de grosses modifications des pompes.

D'autres objets, caractéristiques et avantages de l'invention ressortiront de la description suivante, donnée à titre d'exemple, sans caractère limitatif, faite en regard des dessins annexés sur lesquels:
- la figure 1 représente une vue schématique de côté d'éléments d'un dispositif de pompage et de traitement des gaz,
- la figure 2 représente une vue schématique en coupe transversale d'éléments du dispositif de pompage et de traitement des gaz de la figure 1,
- la figure 3 représente une vue schématique en coupe d'un autre exemple de tubes insérés l'un dans l'autre,
- la figure 4 représente une vue schématique en coupe transversale d'éléments d'un autre exemple de réalisation d'un dispositif de pompage et de traitement des gaz,
- la figure 5 est une vue agrandie d'un détail en pointillés du dispositif de la figure 4,
- la figure 6 représente une vue en coupe du support intermédiaire du moyen de traitement des gaz de la figure 4,
- la figure 7 représente une vue en coupe du tube interne et du tube externe du moyen de traitement des gaz du dispositif de la figure 4, et
- la figure 8 représente un moyen de pompage supplémentaire et des éléments raccordés à la sortie du moyen de pompage supplémentaire.

Sur ces figures, les éléments identiques portent les mêmes numéros de référence. Pour faciliter la compréhension, seuls les éléments nécessaires à la compréhension de l'invention sont représentés.

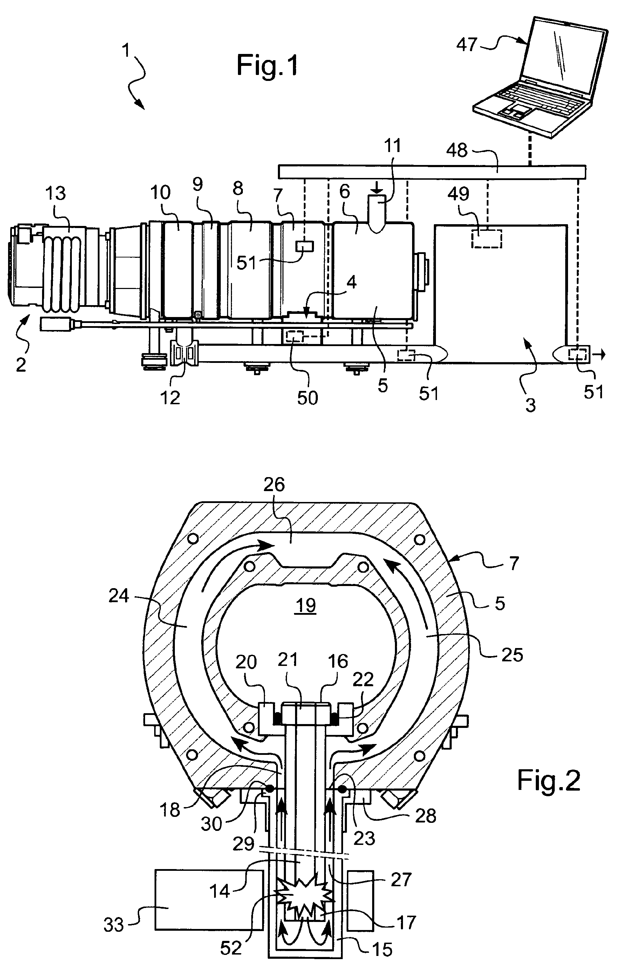

Le dispositif de pompage et de traitement des gaz 1 représenté sur la figure 1 comprend une pompe à vide 2, un moyen de pompage supplémentaire 3 et un moyen de traitement des gaz 4 comportant une source de plasma, pouvant générer des ondes aptes à former un plasma sous une atmosphère contrôlée.

Le dispositif de pompage et de traitement des gaz 1 est par exemple raccordé à la sortie d'une chambre de procédés d'un équipement de fabrication de semi-conducteurs.

La pompe à vide 2 comporte un stator 5 généralement en fonte, comportant une pluralité d'étages de pompage, cinq dans cet exemple, 6, 7, 8, 9 et 10 ainsi que des canaux inter-étages.

Les étages de pompage 6, 7, 8, 9 et 10 comprennent respectivement un logement central présentant une entrée agencée dans la partie supérieure de la pompe à vide 2 et une sortie agencée dans la partie inférieure de la pompe à vide 2. Les logements des étages de pompage 6, 7, 8, 9 et 10 sont fluidiquement raccordés en série les uns à la suite des autres par les canaux inter-étages. Les canaux inter-étages raccordent la sortie de l'étage de pompage qui précède à l'entrée de l'étage qui suit, entre l'aspiration 11 de la pompe à vide 2 et son refoulement 12. L'aspiration 11 est par exemple raccordée à la sortie de la chambre de procédés. Le refoulement 12 est raccordé au moyen de pompage supplémentaire 3.

A l'intérieur, la pompe à vide 2 comporte deux rotors de profils identiques, tournant dans les logements en sens opposé. Lors de la rotation, le gaz aspiré est emprisonné dans l'espace libre compris entre les rotors et le stator 5, puis il est refoulé vers l'étage de pompage suivant. Les rotors sont portés par des arbres qui s'étendent dans les étages de pompage et sont entraînés par un moteur 13 de la pompe à vide 2. Les étages de pompage 6, 7, 8, 9 et 10 sont solidarisés ensemble pour former un corps de pompe à vide monobloc, traversé par les arbres des rotors. La pompe à vide 2 est par exemple une pompe à vide sèche connue sous le nom « Roots » avec deux ou trois lobes ou « Claw » selon la forme des lobes.

Comme on peut le voir sur l'exemple illustratif des figures 1 et 2, le moyen de traitement des gaz 4 peut être agencé sous le stator 5.

Mieux visible sur la figure 2 représentant une vue de coupe et de face du stator 5 au niveau du deuxième étage de pompage 7, le moyen de traitement des gaz 4 comporte un tube interne 14, constitué de matériau céramique et un tube externe 15 borgne, constitué de matériau céramique.

Les matériaux céramique présentent l'avantage d'être inertes chimiquement et particulièrement robustes face aux agressions chimiques et aux températures de gaz élevées. Ils sont en outre électriquement neutres et donc transparents aux ondes de la source de plasma, ce qui permet à ces dernières de traverser les tubes 14, 15 pour générer un plasma sur les gaz. De plus, les matériaux céramique résistent à une mise sous vide. Les tubes en matériau céramique présentent donc toutes les qualités qui sont requises d'une part pour la fonction de moyen de traitement des gaz 4 et d'autre part, pour la fonction de pompage de la pompe à vide 2. Les tubes 14, 15 sont par exemple entièrement constitués de nitrure de Bore ou de nitrure d'aluminium, encore plus résistant.

Le tube interne 14 présente une extrémité d'entrée 16 et une extrémité de sortie 17 pour être traversé par le gaz à pomper. Le tube interne 14 traverse l'épaisseur du stator 5 au niveau du deuxième étage de pompage 7 dans un canal de sortie 18 ménagé dans le stator 5. L'extrémité d'entrée 16 est fixée à la sortie du logement central 19 (à l'entrée du canal de sortie 18).

L'extrémité d'entrée 16 est par exemple raccordée au stator par un support intermédiaire 20, métallique, tel qu'en acier inoxydable. Le support intermédiaire 20 présente un logement axial muni d'une rainure annulaire recevant un joint 22 comprimé contre une collerette de fixation 21 du tube interne 14, ménagée autour de l'extrémité d'entrée 16.

Le tube externe 15 et le tube interne 14 sont par exemple coaxiaux. Le tube externe 15 reçoit l'extrémité de sortie 17 du tube interne 14.

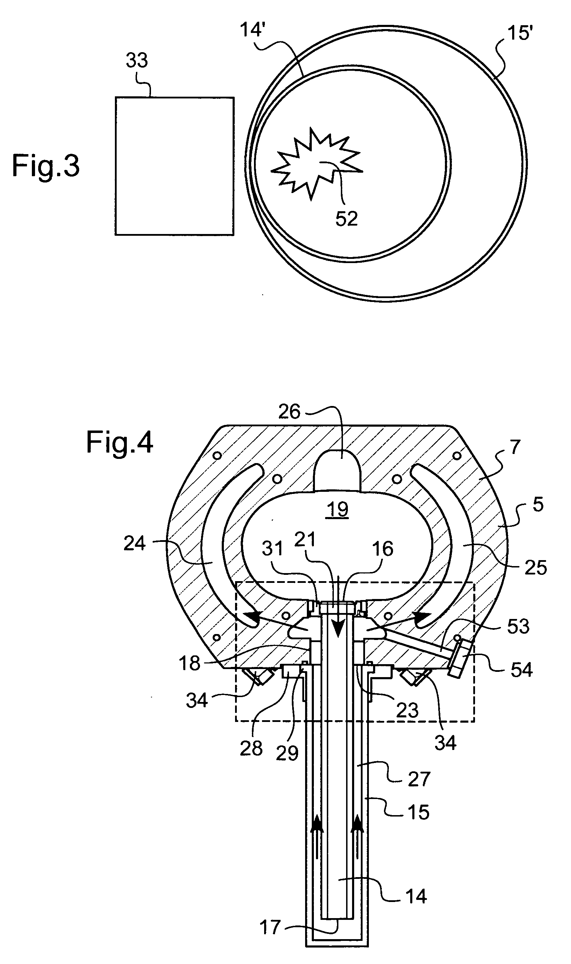

Selon une autre forme de réalisation visible sur la figure 3, l'axe du tube interne 14' est excentré de l'axe du tube externe 15'. Les parois du tube interne 14' sont ainsi rapprochées localement des parois du tube externe 15'. La source de plasma 33 est agencée pour générer des ondes à proximité de cette zone de rapprochement des deux tubes. Ainsi, la pénétration des ondes à l'intérieur du tube interne 14 est favorisée puisque l'épaisseur de gaz à traverser par les ondes est réduite, ce qui facilite la formation du plasma 52 à l'intérieur du tube interne 14' et ceci sans restreindre la section de passage des gaz et donc sans limiter la conductance.

Le tube externe 15 présente une unique ouverture 23 raccordée de manière étanche au stator 5, à l'extérieur de celui-ci. L'ouverture 23 communique avec les entrées des deux canaux inter-étages 24, 25 ménagés de part et d'autre du logement central 19 et raccordés à l'entrée supérieure 26 de l'étage de pompage suivant.

Les tubes 14, 15 définissent un trajet pour les gaz pompés 27 partiellement à l'extérieur du stator 5.

Plus précisément, le trajet 27 pour les gaz à pomper est ménagé à l'extrémité de sortie 17 du tube interne 14, entre le tube interne 14 et le tube externe 15, et entre le tube interne 14 et le canal de sortie 18, en aval du raccordement de l'extrémité d'entrée 16 du tube interne 14 dans le sens d'écoulement des gaz pompés (voir flèches sur la figure 2). Le trajet des gaz 27 communique aussi avec les entrées des deux canaux inter-étage 24, 25.

Le raccordement étanche du tube externe 15 est par exemple réalisé par l'assemblage d'une bride annulaire 28 du dispositif 1 au stator 5, la bride annulaire 28 retenant un épaulement de fixation 29 ménagé dans le matériau du tube externe 15, en bordure de l'ouverture 23, pour fixer le tube externe 15 au stator 5. En outre, le dispositif de pompage et de traitement des gaz 1 comporte un joint 30, qui est disposé contre l'épaulement de fixation 29, par exemple dans une gorge ménagée dans le stator 4, la bride annulaire 28 coopérant avec l'épaulement de fixation 29 pour fixer le tube externe 15 au stator 5 de manière étanche.

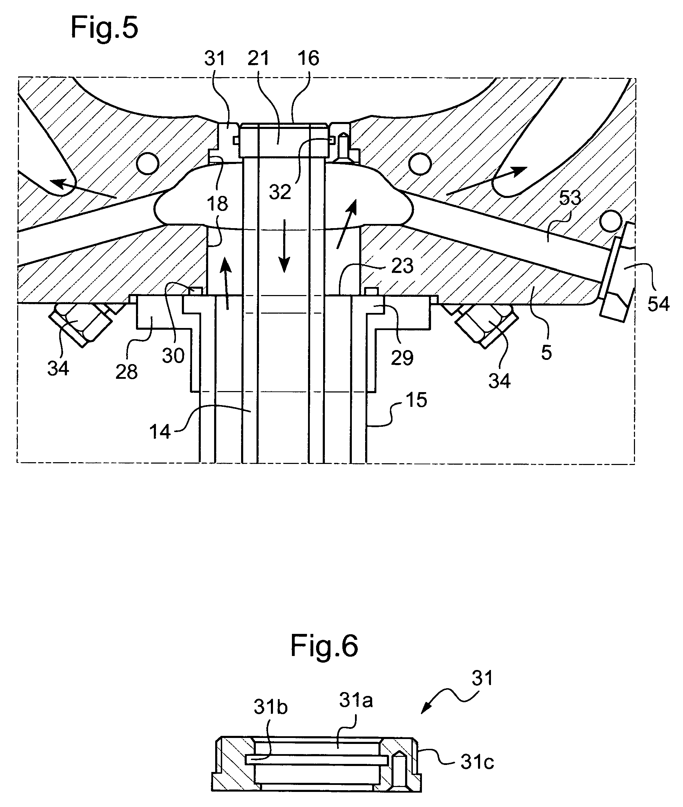

Selon un exemple de réalisation représenté sur les figures 4 et 5, l'extrémité d'entrée 16 du tube interne 14 est raccordée à l'entrée du canal de sortie 18, de manière à affleurer la sortie du logement central 19 recevant les rotors, pour s'assurer de ne pas toucher ceux-ci.

En outre, dans cet exemple de réalisation, l'extrémité d'entrée 16 du tube interne 14 est fixée de manière amovible au support intermédiaire 31. De plus, le support intermédiaire 31 est fixé de manière amovible au stator 5. On facilite ainsi le montage et le remplacement des tubes interne et externe 14 et 15 à l'assemblage et si ceux-ci doivent être remplacés.

Par exemple, la collerette de fixation 21 de l'extrémité d'entrée 16 est fixée au support intermédiaire 31 par enfoncement dans son logement axial 31a, comprimant un joint 32 logé dans la rainure annulaire 31b. Le support intermédiaire 31 présente un pas de vis 31c pour être vissé dans le canal de sortie 18 taraudé du stator 5. L'étanchéité entre le support intermédiaire 31 et le stator 5 peut être réalisée classiquement par du téflon (figures 5 et 6).

On a également représenté plus précisément les tubes interne et externe sur la figure 6.

Les diamètres des tubes 14, 15 sont déterminés relativement au diamètre interne d1 du tube interne 14 qui est prévu le plus grand possible par rapport à la dimension de la sortie du logement 19 des rotors. La section du trajet 27 entre le tube interne 14 et le tube externe 15 est au moins égale au diamètre interne d1 du tube interne 14.

Le diamètre interne d1 du tube interne 14 est par exemple compris entre 1 et 2 centimètres. Il est de préférence de l'ordre de 1,5 cm. L'épaisseur est par exemple de l'ordre de 0, 5 centimètres. La surépaisseur du tube 14 formant la collerette 21 est par exemple de l'ordre de 0, 14 centimètres sur une longueur de 1 centimètre. La longueur L1 du tube interne 14 est par exemple comprise entre 10 et 30 centimètres.

Le diamètre interne d2 du tube externe 15 est par exemple compris entre 3 et 5 centimètres. Il est de préférence de l'ordre de 4,1 cm. L'épaisseur est par exemple de l'ordre de 0, 5 centimètres. La surépaisseur du tube formant la collerette est par exemple de l'ordre de 0, 5 centimètres sur une longueur de 0, 55 centimètres. La longueur du tube externe est par exemple comprise entre 10 et 30 centimètres.

La longueur L2 du tube externe 15 est par exemple de l'ordre de 24 cm pour une longueur L1 du tube interne 14 de l'ordre de 27 cm et la longueur entre l'extrémité de sortie 17 du tube interne 14 et le fond du tube externe 15 pour le trajet des gaz pompés est de l'ordre de 1, 2 cm.

On conserve ainsi un trajet des gaz 27 optimisé, suffisamment large pour ne pas diminuer l'efficacité de pompage et pas trop volumineux pour ne pas créer une discontinuité de volume ou augmenter la puissance de la source de plasma.

Au montage, on insère le tube interne 14 dans le support intermédiaire 21 et on visse l'ensemble au stator 5. On enfile ensuite le tube externe 15 autour du tube interne 14 et on fixe celui-ci au stator 5.

En revenant au schéma de la figure 2, on voit que la source de plasma 33 est disposée à l'extérieur du stator 5, à proximité du tube externe 15, pour générer un plasma 52 sur le trajet des gaz pompés 27, partiellement entre le tube externe 15 et le tube interne 14.

La source de plasma est par exemple une source de plasma de type micro-ondes 33. La source de plasma micro-ondes comporte par exemple un générateur de type magnétron et un guide d'onde permettant le transport des ondes depuis le générateur jusqu'aux tubes interne 14 et externe 15 pour apporter la puissance nécessaire à la génération du plasma. Le guide d'onde est relié par une pièce métallique au stator 5 afin d'assurer une continuité de la masse. La continuité de la masse permet que le plasma s'étende en dehors du guide d'onde. Le guide d'onde est agencé autour du tube externe 15.

La source de plasma 33 peut également comporter un moyen de contrôle de l'allumage du plasma, permettant d'indiquer par exemple par un signal électrique, que le plasma 52 est bien allumé suite à la mise en route du générateur.

Egalement, la source de plasma 33 peut comporter un moyen d'analyse du plasma, apte à identifier et quantifier les gaz décomposés pour surveiller le bon déroulement du procédé de pompage et de traitement des gaz par le dispositif 1. Par exemple, un conduit borgne 53 est ménagé dans le stator (figure 5). L'extrémité borgne du conduit 53 comporte un hublot 54 laissant passer la lumière, pour analyser la lumière du plasma depuis l'extérieur du stator.

Pour réduire encore plus la consommation en énergie, le générateur de la source de plasma 33 peut être pulsé. La puissance est alors envoyée périodiquement, le réglage de la période permettant de réduire la puissance moyenne consommée.

Le plasma permet de décomposer au moins une partie des composants des gaz pompés pour casser les molécules complexes en éléments plus petits. Les molécules visées par la décomposition pouvant être, par exemple, des composés perfluorocarbones (PFC, « perfluorocarbon compound » en anglais), des halogènes ou des gaz acides (HCl, BCl₃,...).

Le traitement des gaz par plasma peut être amélioré en combinant la décomposition des gaz par le plasma à une injection de gaz réactant, tel que l'oxygène ou la vapeur d'eau, qui empêche la recomposition des gaz décomposés par le plasma, et qui les recompose suivant une réaction chimique contrôlée en sous-produits moins nocifs.

Pour cela, la pompe à vide 2 peut comporter un moyen d'injection de gaz réactant pour injecter un gaz réactant dans la pompe à vide 2, en aval de la source de plasma 33 dans le sens d'écoulement des gaz. Le moyen d'injection de gaz réactant est par exemple formé par deux canaux de gaz réactant 34 raccordés à une source externe de gaz réactant et communiquant avec le trajet des gaz 27.

De manière avantageuse, le moyen de pompage supplémentaire 3 comporte une pompe à vide primaire dite à anneau liquide 35. Ainsi, on utilise le moyen de pompage supplémentaire 3 pour réduire la pression dans le deuxième étage de pompage 7 mais aussi pour neutraliser les gaz décomposés en les recombinants avec une solution aqueuse.

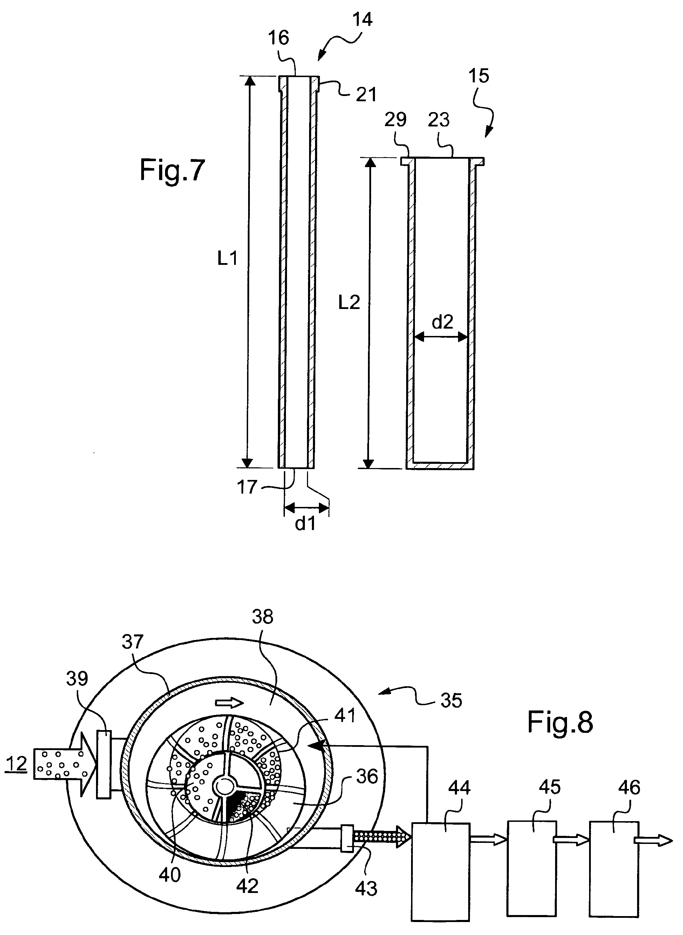

Un schéma de fonctionnement d'une pompe à anneau liquide est représenté sur la figure 8. La pompe à anneau liquide 35 comprend généralement une turbine 36 dont l'axe est excentré par rapport au centre d'une chambre 37 comprenant une solution aqueuse liquide 38, par exemple de l'eau.

Les gaz reçus au niveau du port d'entrée 39 sont admis dans la chambre 37 au niveau d'une zone d'aspiration 40. Du fait de l'excentricité de la turbine 36, le liquide 38 se déplace vers l'extérieur créant un vide au niveau de la zone 40 dans lequel le gaz s'introduit. Le gaz est ensuite entrainé par la turbine vers la zone de compression 41. En effet, l'excentricité de la turbine 36 provoque dans cette zone une compression exercée par le liquide 38 sur le gaz.

En outre, la mise en réaction des gaz décomposés avec le liquide 38 permet de faire réagir les composés acides avec une base pour former un sel comme par exemple du fluorure de calcium ou de sodium ou du chlorure de calcium ou de sodium, cette réaction permettant de neutraliser le gaz acide sous la forme d'un sel.

Les gaz atteignent finalement la zone de refoulement 42 dans laquelle le gaz comprimé est évacué vers le port de sortie 43. Une partie du liquide est aussi évacuée avec le gaz de sorte qu'au niveau d'un port de sortie 43, un fluide diphasique (gaz+liquide) est expulsé.

La pompe à vide primaire dite à anneau liquide 35 peut comporter plusieurs étages de pompage afin d'augmenter l'échange entre le liquide 38 et les gaz et donc l'efficacité globale du procédé.

En sortie de la pompe à anneau liquide 35, le mélange d'eau et de gaz est envoyé vers un bac séparateur 44. Une fois les phases gazeuse et liquide séparées, une partie du liquide est recyclée dans la pompe à anneau liquide 35 de manière à réduire la consommation d'eau.

A la sortie du bac séparateur 44, la phase gazeuse est transmise à un dernier élément de lavage 45 des traces résiduelles de gaz toxiques non encore piégés. A la sortie de cet élément de lavage 45, le gaz lavé est introduit dans un dévésiculeur 46 destiné à piéger les molécules d'eau en suspension.

Le dispositif de pompage et de traitement des gaz 1 peut comporter une unité de traitement 47 (figure 1), tel qu'un ordinateur, relié par exemple par un bus de communication 48, à :
- un moyen de pilotage 49 du moyen de pompage supplémentaire 3, pour piloter le moyen de pompage supplémentaire 3,
- un moyen de contrôle 50 de la source de plasma comportant par exemple le moyen d'analyse du plasma et le moyen de contrôle de l'allumage du plasma, pour contrôler la source de plasma, et
- des moyens de contrôle 51 des gaz à pomper dans le logement central du deuxième étage de pompage 7 et/ou dans le refoulement 12 de la pompe à vide 2 et/ou en sortie du moyen de pompage supplémentaire, pour identifier et/ou quantifier les gaz pompés.

L'unité de traitement 47 peut en outre être reliée à l'équipement de fabrication de semi-conducteurs dont le dispositif 1 permet le pompage et le traitement des gaz. Ainsi, l'équipement peut informer le dispositif 1 de la nature et/ou des quantités de gaz envoyés dans la chambre de procédés et susceptibles d'être reçus à l'aspiration du dispositif de pompage et de traitement des gaz 1. L'unité de traitement 47 peut alors par exemple, adapter la puissance de la source de plasma en fonction de ces informations.

Egalement, en interfaçant l'unité de traitement 47 avec le dernier élément de lavage 45, il est possible d'ajuster la quantité d'eau nécessaire pour celui-ci afin de réduire sa consommation.

En fonctionnement, les gaz à pomper issus de la chambre de procédé, sont aspirés dans la pompe à vide 2. Lorsqu'ils sortent du deuxième étage de pompage 7, les gaz traversent le tube interne 14, puis sortent de celui-ci et passent entre les deux tubes 14, 15 pour ressortir vers les canaux inter-étage 24, 25. Les ondes envoyées au moyen du guide d'onde passent au travers des tubes en céramique 14,15 et génèrent un plasma 52 sous vide. Les gaz, une fois décomposés, sont évacués dans les canalisations inter-étages 23, 24 après avoir été neutralisés par le gaz réactant, puis hors de la pompe à vide 2, par la pompe à anneau liquide 35. Les gaz neutralisés sont ensuite lavés.

Le plasma est alors au moins en partie délocalisé hors du stator 5 de la pompe à vide 2 dans les tubes en céramiques 14, 15. La longueur des tubes 14, 15 peut être optimisée pour obtenir un parcours du gaz suffisant permettant d'augmenter les temps de résidence du gaz à traiter dans les tubes 14, 15 et ainsi d'augmenter la taille du plasma. Il est alors possible de garantir l'efficacité de décomposition recherchée par le plasma sans avoir à augmenter la puissance de la source de plasma.

En outre, l'impact sur la capacité de pompage de la pompe à vide est limité d'une part, car la pression des gaz dans la zone de génération du plasma est inférieure à 1 mbar. Cette basse pression est obtenue d'une part en agençant le moyen de traitement des gaz en sortie du deuxième étage de pompage, proche de l'aspiration de la pompe à vide et d'autre part, grâce au moyen de pompage supplémentaire.

Deuxièmement, la géométrie du système de traitement des gaz ne limite que très peu la conductance du trajet des gaz. Par rapport à une pompe à vide standard, c'est-à-dire sans moyen de traitement des gaz intégré, la conductance résultant des deux tubes insérés l'un dans l'autre n'est diminuée que par le demi-tour en bout de course des tubes 14, 15. Relativement, la longueur des tubes n'impacte que très peu la conductance. Le moyen de traitement des gaz présente donc le minimum de coude ou discontinuité de volume, susceptibles de freiner la circulation des gaz et donc de réduire la capacité de pompage de la pompe à vide 2.

Pour obtenir une efficacité de l'ordre de 90% de décomposition du gaz CF₄ dans un procédé classique de gravure oxyde 200 mm, la puissance de la source de plasma nécessaire est alors inférieure à 2000W. Les coûts de fonctionnement énergétiques sont alors considérablement réduits et il n'y a plus de risque de surchauffe du stator 5.

Le dispositif de pompage et de traitement des gaz 1 est donc ainsi intégré, sans surchauffe du stator de la pompe à vide 2, sans dégrader les capacités de pompage de la pompe à vide 2 et en limitant les besoins énergétiques.

## Revendications

1. Dispositif de pompage et de traitement des gaz comprenant un stator (5) comportant une pluralité d'étages de pompage (6, 7, 8, 9, 10) raccordés en série les uns à la suite des autres entre une aspiration (11) et un refoulement (12) par les canaux inter-étages (24, 25), **caractérisé en ce que** le dispositif de pompage et de traitement des gaz comporte :
- un tube interne (14) et un tube externe (15) borgne, les tubes étant insérés l'un dans l'autre et constitués de matériau céramique, le tube interne (14) étant raccordé au refoulement du logement (19) des rotors d'un étage de pompage (7) et le tube externe (15) étant raccordé au stator et communiquant avec au moins un canal inter-étage ménagé dans le stator, les tubes définissant un trajet pour les gaz pompés (27), et
- une source de plasma (33) disposée à l'extérieur du stator (5) pour générer un plasma (52) sur le trajet des gaz pompés (27).

2. Dispositif de pompage et de traitement des gaz selon la revendication 1, dans lequel le tube interne (14) et le tube externe (15) sont coaxiaux.

3. Dispositif de pompage et de traitement des gaz selon la revendication 1, dans lequel l'axe du tube interne (14') est excentré de l'axe du tube externe (15').

4. Dispositif de pompage et de traitement des gaz selon l'une des revendications 1 à 3, dans lequel le tube interne (14) est raccordé dans le stator et le tube externe (15) est raccordé à l'extérieur du stator.

5. Dispositif de pompage et de traitement des gaz selon l'une des revendications 1 à 4, dans lequel le dispositif de pompage et de traitement des gaz comporte en outre une pompe à vide primaire dite à anneau liquide (35).

6. Dispositif de pompage et de traitement des gaz selon l'une des revendications 1 à 5, **caractérisé en ce que** le moyen de traitement des gaz est raccordé au refoulement du logement des rotors du deuxième étage de pompage (7).

7. Dispositif de pompage et de traitement des gaz selon l'une des revendications 1 à 6, dans lequel les étages de pompage (6, 7, 8, 9, 10) comprennent une entrée respective agencée dans la partie supérieure du dispositif de pompage et de traitement des gaz et dans lequel les tubes sont agencés sous le stator (5), le tube externe (15) communiquant avec deux canaux inter-étages (24, 25) ménagés de part et d'autre du logement (19), pour raccorder l'entrée supérieure (26) de l'étage de pompage suivant.

8. Dispositif de pompage et de traitement des gaz selon l'une des revendications précédentes, dans lequel l'extrémité d'entrée (16) du tube interne (14) affleure la sortie (18) du logement (19) du deuxième étage de pompage (7).

9. Dispositif de pompage et de traitement des gaz selon la revendication 8, dans lequel l'extrémité d'entrée (16) du tube interne (14) est raccordée de manière amovible à la sortie (18) et dans lequel l'ouverture (23) du tube externe (15) est raccordée de manière amovible au stator (5).

10. Dispositif de pompage et de traitement des gaz selon la revendication 9, dans lequel l'extrémité d'entrée (16) du tube interne (14) est raccordée au stator (5) par un support intermédiaire métallique (20 ; 31) du moyen de traitement des gaz (4).

11. Dispositif de pompage et de traitement des gaz selon la revendication 10, dans lequel une collerette de fixation (21) est ménagée dans le matériau du tube interne (14), autour de l'extrémité d'entrée (16) et dans lequel le support intermédiaire (31) présente un logement axial muni d'une rainure annulaire recevant un joint (32), la collerette de fixation (21) de l'extrémité d'entrée (16) étant fixée au support intermédiaire (31) par enfoncement dans le logement axial.

12. Dispositif de pompage et de traitement des gaz selon l'une des revendications 10 ou 11, dans lequel le support intermédiaire (31) est vissé au stator (5).

13. Dispositif de pompage et de traitement des gaz selon l'une des revendications 9 à 12, dans lequel un épaulement de fixation (29) est ménagé dans le matériau du tube externe (15), en bordure de l'ouverture (23) et dans lequel le dispositif de pompage et de traitement des gaz (1) comporte une bride annulaire (28) et un joint (30), la bride annulaire (28) coopérant avec l'épaulement de fixation (29) pour fixer le tube externe (15) au stator (5) de manière étanche.

14. Dispositif de pompage et de traitement des gaz selon l'une des revendications précédentes, dans lequel le matériau céramique du tube interne (14) et du tube externe (15) est du nitrure de bore.

15. Dispositif de pompage et de traitement des gaz selon l'une des revendications 1 à 13, dans lequel le matériau céramique du tube interne (14) et du tube externe (15) est du nitrure d'aluminium.

## Patentansprüche

1. Vorrichtung zum Pumpen und zur Behandlung von Gasen, welche einen Stator (5) aufweist, der mehrere Pumpstufen (6, 7, 8, 9, 10) aufweist, die zwischen einem Saugeinlass (11) und einem Druckauslass (12) durch die Stufenverbindungskanäle (24, 25) hintereinander in Reihe geschaltet sind, **dadurch gekennzeichnet, dass** die Vorrichtung zum Pumpen und zur Behandlung von Gasen aufweist:
- ein inneres Rohr (14) und ein äußeres Rohr (15) mit geschlossenem Ende, wobei die Rohre ineinander eingesetzt sind und aus Keramikmaterial bestehen, wobei das innere Rohr (14) an den Druckauslass der Aufnahme (19) der Rotoren einer Pumpstufe (7) angeschlossen ist und das äußere Rohr (15) an den Stator angeschlossen ist und mit wenigstens einem Stufenverbindungskanal kommuniziert, der in dem Stator ausgebildet ist, wobei die Rohre einen Durchflussweg für die gepumpten Gase (27) definieren, und
- eine Plasmaquelle (33), die außerhalb des Stators (5) angeordnet ist, um ein Plasma (52) auf dem Durchflussweg der gepumpten Gase (27) zu erzeugen.

2. Vorrichtung zum Pumpen und zur Behandlung von Gasen nach Anspruch 1, wobei das innere Rohr (14) und das äußere Rohr (15) koaxial sind.

3. Vorrichtung zum Pumpen und zur Behandlung von Gasen nach Anspruch 1, wobei die Achse des inneren Rohres (14') exzentrisch bezüglich der Achse des äußeren Rohres (15') ist.

4. Vorrichtung zum Pumpen und zur Behandlung von Gasen nach einem der Ansprüche 1 bis 3, wobei das innere Rohr (14) in dem Stator angeschlossen ist und das äußere Rohr (15) außerhalb des Stators angeschlossen ist.

5. Vorrichtung zum Pumpen und zur Behandlung von Gasen nach einem der Ansprüche 1 bis 4, wobei die Vorrichtung zum Pumpen und zur Behandlung von Gasen außerdem eine primäre, sogenannte Flüssigkeitsring-Vakuumpumpe (35) aufweist.

6. Vorrichtung zum Pumpen und zur Behandlung von Gasen nach einem der Ansprüche 1 bis 5, **dadurch gekennzeichnet, dass** das Mittel zur Behandlung von Gasen an den Druckauslass der Aufnahme der Rotoren der zweiten Pumpstufe (7) angeschlossen ist.

7. Vorrichtung zum Pumpen und zur Behandlung von Gasen nach einem der Ansprüche 1 bis 6, wobei die Pumpstufen (6, 7, 8, 9, 10) einen jeweiligen Eingang aufweisen, der im oberen Teil der Vorrichtung zum Pumpen und zur Behandlung von Gasen angeordnet ist, und wobei die Rohre unter dem Stator (5) angeordnet sind, wobei das äußere Rohr (15) mit zwei Stufenverbindungskanälen (24, 25) kommuniziert, die beiderseits der Aufnahme (19) angeordnet sind, um den oberen Eingang (26) der folgenden Pumpstufe anzuschließen.

8. Vorrichtung zum Pumpen und zur Behandlung von Gasen nach einem der vorhergehenden Ansprüche, wobei das Eingangsende (16) des inneren Rohres (14) bündig mit dem Ausgang (18) der Aufnahme (19) der zweiten Pumpstufe (7) abschließt.

9. Vorrichtung zum Pumpen und zur Behandlung von Gasen nach Anspruch 8, wobei das Eingangsende (16) des inneren Rohres (14) lösbar an den Ausgang (18) angeschlossen ist und wobei die Öffnung (23) des äußeren Rohres (15) lösbar an den Stator (5) angeschlossen ist.

10. Vorrichtung zum Pumpen und zur Behandlung von Gasen nach Anspruch 9, wobei das Eingangsende (16) des inneren Rohres (14) an den Stator (5) durch einen metallischen Zwischenträger (20; 31) des Mittels zur Behandlung von Gasen (4) angeschlossen ist.

11. Vorrichtung zum Pumpen und zur Behandlung von Gasen nach Anspruch 10, wobei ein Befestigungsbund (21) um das Eingangsende (16) herum in dem Material des inneren Rohres (14) ausgebildet ist und wobei der Zwischenträger (31) eine axiale Aufnahme aufweist, die mit einer Ringnut ausgestattet ist, die eine Dichtung (32) aufnimmt, wobei der Befestigungsbund (21) des Eingangsendes (16) an dem Zwischenträger (31) durch Eintreiben in die axiale Aufnahme befestigt ist.

12. Vorrichtung zum Pumpen und zur Behandlung von Gasen nach einem der Ansprüche 10 oder 11, wobei der Zwischenträger (31) an den Stator (5) angeschraubt ist.

13. Vorrichtung zum Pumpen und zur Behandlung von Gasen nach einem der Ansprüche 9 bis 12, wobei ein Befestigungsabsatz (29) in dem Material des äußeren Rohres (15) als Umrandung der Öffnung (23) ausgebildet ist und wobei die Vorrichtung zum Pumpen und zur Behandlung von Gasen (1) einen ringförmigen Flansch (28) und eine Dichtung (30) aufweist, wobei der ringförmige Flansch (28) mit dem Befestigungsabsatz (29) zusammenwirkt, um das äußere Rohr (15) dicht an dem Stator (5) zu befestigen.

14. Vorrichtung zum Pumpen und zur Behandlung von Gasen nach einem der vorhergehenden Ansprüche, wobei das Keramikmaterial des inneren Rohres (14) und des äußeren Rohres (15) Bornitrid ist.

15. Vorrichtung zum Pumpen und zur Behandlung von Gasen nach einem der Ansprüche 1 bis 13, wobei das Keramikmaterial des inneren Rohres (14) und des äußeren Rohres (15) Aluminiumnitrid ist.

## Claims

1. Device for pumping and treating gases comprising a stator (5) comprising a plurality of pumping stages (6, 7, 8, 9, 10) connected in series one after another between a suction side (11) and a delivery side (12) by the inter-stage ducts (24, 25), **characterized in that** the device for pumping and treating gases comprises:
- an inner tube (14) and a blind outer tube (15), the tubes being inserted one inside the other and made of ceramic material, the inner tube (14) being connected to the delivery side of the rotor housing (19) of a pumping stage (7) and the outer tube (15) being connected to the stator and communicating with at least one inter-stage duct formed in the stator, the tubes defining a path for the pumped gases (27), and
- a plasma source (33) located outside the stator (5) to generate a plasma (52) in the path of the pumped gases (27).

2. Device for pumping and treating gases according to Claim 1, in which the inner tube (14) and the outer tube (15) are coaxial.

3. Device for pumping and treating gases according to Claim 1, in which the axis of the inner tube (14') is off-centred from the axis of the outer tube (15').

4. Device for pumping and treating gases according to one of Claims 1 to 3, in which the inner tube (14) is connected inside the stator and the outer tube (15) is connected to the outside of the stator.

5. Device for pumping and treating gases according to one of Claims 1 to 4, in which the device for pumping and treating gases further comprises a primary vacuum pump (35) of the liquid ring pump type.

6. Device for pumping and treating gases according to one of Claims 1 to 5, **characterized in that** the means for treating the gases is connected to the delivery side of the rotor housing of the second pumping stage (7).

7. Device for pumping and treating gases according to one of Claims 1 to 6, in which the pumping stages (6, 7, 8, 9, 10) comprise a respective inlet arranged in the upper part of the device for pumping and treating gases and in which the tubes are arranged under the stator (5), the outer tube (15) communicating with two inter-stage ducts (24, 25) formed one on either side of the housing (19), for connecting the upper inlet (26) of the next pumping stage.

8. Device for pumping and treating gases according to one of the preceding claims, in which the inlet end (16) of the inner tube (14) lies flush with the outlet (18) from the housing (19) of the second pumping stage (7).

9. Device for pumping and treating gases according to Claim 8, in which the inlet end (16) of the inner tube (14) is connected removably to the outlet (18) and in which the opening (23) of the outer tube (15) is connected removably to the stator (5).

10. Device for pumping and treating gases according to Claim 9, in which the inlet end (16) of the inner tube (14) is connected to the stator (5) by an intermediate metal support (20; 31) of the gas treatment means (4).

11. Device for pumping and treating gases according to Claim 10, in which a fixing collar (21) is formed in the material of the inner tube (14), around the inlet end (16), and in which the intermediate support (31) has an axial housing equipped with an annular groove accepting a seal (32), the fixing collar (21) of the inlet end (16) being fixed to the intermediate support (31) by insertion into the axial housing.

12. Device for pumping and treating gases according to one of Claims 10 or 11, in which the intermediate support (31) is screwed to the stator (5).

13. Device for pumping and treating gases according to one of Claims 9 to 12, in which a fixing shoulder (29) is formed in the material of the outer tube (15), at the border of the opening (23), and in which the device for pumping and treating gases (1) comprises an annular flange (28) and a seal (30), the annular flange (28) collaborating with the fixing shoulder (29) to fix the outer tube (15) to the stator (5) in a sealed manner.

14. Device for pumping and treating gases according to one of the preceding claims, in which the ceramic material of the inner tube (14) and of the outer tube (15) is boron nitride.

15. Device for pumping and treating gases according to one of Claims 1 to 13, in which the ceramic material of the inner tube (14) and of the outer tube (15) is aluminium nitride.
